# EUROPÄISCHE PATENTSCHRIFT

(11) **EP 2 137 451 B1**
(45) Veröffentlichungstag und Bekanntmachung des Hinweises auf die Patenterteilung: **17.10.2012**
(21) Anmeldenummer: 08734748.0
(22) Anmeldetag: 25.03.2008
(51) Int. Cl.: F16L 59/14, B32B 1/08, B32B 7/02, B29C 44/32

(54) **KUNSTSTOFFROHR**
PLASTIC TUBE
TUBE EN PLASTIQUE

(30) Priorität: 26.03.2007 DE 202007004596 U
(43) Veröffentlichungstag der Anmeldung: 30.12.2009
(73) Patentinhaber: Rehau AG + Co, 95111 Rehau (DE)
(72) Erfinder: STADTHALTER, Peter, 96152 Burghaslach (DE)
(86) Internationale Anmeldenummer: PCT/EP2008/002338
(87) Internationale Veröffentlichungsnummer: WO 2008/116625

(56) Entgegenhaltungen:
- EP-A- 0 897 788
- EP-A- 1 174 261
- EP-A- 1 840 444
- GB-A- 2 046 865
- US-A- 3 644 168
- US-A- 4 094 715

## Beschreibung

Die vorliegende Erfindung betrifft ein Kunststoffrohr.

Rohre mit einer nachträglichen Ummantelung sind bekannt. Bei der nachträglichen Ummantelung kann es sich um einen vorkonfektionierten Schaum, um Reaktionsschaum in einem äußeren Schutzrohr, oder um Steinwolle oder Hartschaumelemente in Verbindung mit einem äußeren Blechmantel handeln. Der Nachteil der nachträglichen Aufbringung einer Ummantelung sind die hohen Herstellungskosten. Zur Wärmeisolierung mittels aufgeschäumtem Kunststoff versehene Rohre sind beispielsweise aus der EP 0 897 788 A1 oder der GB 2 046 865 A bekannt. Aus der EP 1 840 444 A1 ist ein aufgeschäumter Mantel aus thermoplastischem Kunststoffmaterial für ein wärmeisoliertes Leitungsrohr bekannt.

Aufgabe der vorliegenden Erfindung ist es, ein verbessertes Kunststoffrohr mit Dämmschicht bereitzustellen, das sich nach einem vereinfachten Verfahren herstellen lässt.

Die Aufgabe wird gelöst durch ein Rohr, enthaltend wenigstens eine Trägerschicht, wenigstens eine Wärmedämmschicht und wenigstens eine Schutzschicht, wobei die Schutzschicht auf der Wärmedämmschicht, und diese auf der Trägerschicht angeordnet ist, wobei wenigstens die Trägerschicht und/oder die Schutzschicht wenigstens teilweise ein thermoplastisches Polymer enthält, welches sich dadurch auszeichnet, dass die Dichte der Wärmedämmschicht 30 bis 110 kg/m³ und die Dichte der Schutzschicht 300 bis 750 kg/m³ beträgt.

Erfindungswesentlich ist hierbei, dass die Wahl der Dichte der Wärmedämmschicht und/oder der Schutzschicht wesentliche Vorteile bringt, was die Kombination von Dämmeigenschaften, Schutzfunktion bei Herstellung, Lagerung, Verlegung und Einsatz des Rohres sowie die Knickbeständigkeit des Rohres bei der Verlegung in Radien betrifft.

Das erfindungsgemäße Rohr lässt sich in Radien verlegen, ohne dass die Gefahr besteht, dass das Rohr dabei einknickt und beschädigt wird.

In einer bevorzugten Ausführungsform besteht die Wärmedämmschicht zumindest anteilig aus einem Polymermaterial.

In einer weiteren bevorzugten Ausführungsform kann die Wärmeleitfähigkeit der Wärmedämmschicht höchstens 50 % der Wärmeleitfähigkeit der Trägerschicht betragen.

Bevorzugter ist, wenn die Wärmeleitfähigkeit der Wärmedämmschicht höchstens 10 % der Wärmeleitfähigkeit der Trägerschicht beträgt.

Das erfindungsgemäße Rohr zeichnet sich weiterhin dadurch aus, dass die Trägerschicht ein Polyolefin enthalten kann.

Besonders bevorzugt ist, wenn das Polyolefin ein vernetztes Polyethylen, vorzugsweise ein mit Peroxyd vernetztes Polyethylen (PE-Xa), ist.

Weiterhin enthält die Wärmedämmschicht vorzugsweise ein geschäumtes Polymer und/oder einen Zusatzstoff, der die Wärmeleitung verringert.

Vorzugsweise ist der Zusatzstoff ausgewählt aus der Gruppe, bestehend aus Hohlglaskugeln, geschäumtem Glas, geschäumter Keramik und lamellaren oder Wärmestrahlung reflektierender Materialien.

Weiterhin enthält die Wärmedämmschicht vorzugsweise ein geschäumtes Polyolefin.

In einer besonders bevorzugten Ausführungsform enthält die Trägerschicht vernetztes Polyethylen und die Wärmedämmschicht geschäumtes und vernetztes Polyethylen.

Das Rohr kann zwischen Trägerschicht und Wärmedämmschicht mindestens eine weitere Lage enthalten. Diese kann eine Trennschicht oder Haftschicht sein. Vorzugsweise handelt es sich um eine Trennschicht, die z.B. Wachs oder ein Fluorpolymer enthält. Als Haftschicht kann ein Haftvermittler vorgesehen sein.

Das Rohr kann eine Metallfolie als weitere Schicht zwischen Trägerschicht und Wärmedämmschicht enthalten. Es kann auch eine Metall-Kunststoff-Verbundfolie vorhanden sein. Weiterhin kann eine Sauerstoffsperrschicht, z.B. in Form einer EVOH-Schicht (Ethylvinylalkohol), vorhanden sein. Es ist im Rahmen der vorliegenden Erfindung auch möglich, dass eine Folie vorhanden ist, die eine im Vakuumverfahren aufgebrachte Diffusionssperrschicht aufweist.

In einer bevorzugten Ausführungsform der Erfindung ist die Entfernung der Wärmedämmschicht und der Schutzschicht nach radialem/axialem Durchtrennen in einfacher Weise komplett und ohne Rückstände von der Trägerschicht möglich. Hierzu werden entweder in der Trägerschicht und/oder der Wärmedämmschicht zwei nicht aneinander haftende Polymere verwendet oder es ist eine Trennschicht zwischen Trägerschicht und/oder Wärmedämmschicht und/oder Schutzschicht vorhanden. Ein Beispiel für zwei nicht aneinander haftende Polymere ist Polyethylen und Polyamid.

Der Vorteil dieser Ausführungsform ist die leichte Ablösung der äußeren Schicht bspw. der Wärmedämmschicht und/oder der Schutzschicht zum Zwecke der einfachen Verbindung von Rohren bzw. Rohrabschnitten.

Die Dicke der Trägerschicht beträgt 1 bis 25 mm, vorzugsweise 3 bis 11 mm.

Die Dicke der Wärmedämmschicht beträgt 10 bis 60 mm, vorzugsweise 25 bis 35 mm

Die Dicke der Schutzschicht beträgt 4 bis 25 mm, vorzugsweise 5 bis 9 mm.

Die Wärmedämmschicht kann ein- oder mehrstückig ausgeführt sein. In einer besonderen Ausführungsform weist diese mehrstückige Ausführungsform geschäumte Polymere unterschiedlicher Dichte, insbesondere aus der Gruppe geschäumter vernetzter oder unvernetzter Polyolefine und/oder aus der Gruppe insbesondere flexibler Polyurethanschäume, auf.

Die Erfindung sieht weiterhin Ausführungsformen vor, bei denen zwischen und/oder auf der Träger-, Wärmedämm- oder Schutzschichten Folien angeordnet sind, die z.B. als Diffusionssperrfolie oder als Reflektoren für Wärmestrahlung ausgebildet sind.

Um die Biegeeigenschaften des erfindungsgemäßen Kunststoffrohres zu verbessern, sieht eine besondere Ausführungsform eine zumindest annähernd wellenförmige Strukturierung wenigstens Außenseite der Wärmedämm- und/oder der Schutzschicht vor. Diese wellenförmige Strukturierung kann in Umfangsrichtung senkrecht zur Rohrachse oder schraubenförmig als Vertiefung oder Erhebung ausgebildet sein.

Vorzugsweise werden Trägerschicht, Wärmedämmschicht und Schutzschicht in einem Coextrusionsverfahren hergestellt. Hierzu wird die Trägerschicht, einschließlich eventuell vorhandener Funktionsschichten wie einer Sauerstoffsperrschicht, in der Extrusionslinie vorzugsweise mit einem Schaum versehen, um eine Wärmedämmschicht zu bilden. Bei dem Schaum kann es sich um ein Polymer handeln, das physikalisch, z.B. mittels CO₂ (Kohlendioxid), oder mit einem chemischen Treibmittel geschäumt wurde. Der Schaum wird vorzugsweise mittels eines Querspritzkopfs aufgebracht.

Die Erfindung umfasst auch Ausführungen, in denen die Wärmedämmschicht wenigstens teilweise aus vorgefertigten Elementen besteht.

Die Schutzschicht kann beispielsweise als Druckummantelung oder als Vakuumummantelung aufgebracht werden. Diese kann mit oder ohne Haftvermittler, vorzugsweise ohne Haftvermittler, durchgeführt werden.

Das Rohr kann als erdverlegte Leitung oder für Installationen im Anlagenbau oder der Gebäudetechnik verwendet werden, bei denen neben einer Wärmedämmung auch ein mechanischer Schutz erforderlich ist (z.B. Installationen im Schiffsbau).

Das Rohr kann zum Transport von Fluiden, insbesondere für wasserhaltige Flüssigkeiten, verwendet werden. Hierbei kann es sich beispielsweise um Leitungen für Bier oder Softdrinks handeln, die regelmäßig mit heißem Wasser, Dampf oder Chemikalien gereinigt werden.

Das Rohr kann auch als Kaltwasserleitung verwendet werden. Hierbei wird vorteilhafter Weise eine Kondensatbildung vermieden oder das Rohr vor dem Einfrieren geschützt.

Das Rohr kann auch als Heißwasserleitung verwendet werden. Hierbei wird vorteilhafter Weise der Wärmeverlust verringert.

Das Rohr kann insbesondere als Fernwärmerohr verwendet werden.

Es dient dazu, Fluide und/oder Gase zu transportieren bzw. zu speichern.

Ein Rohrsystem kann mindestens ein erfindungsgemäßes Rohr der beschriebenen Ausgestaltung aufweisen.

### Figurenbeschreibung

Die Erfindung wird anhand von Figuren näher beschrieben:
- Fig. 1: zeigt einen Querschnitt durch ein erfindungsgemäßes Rohr;
- Fig. 2: zeigt einen Querschnitt durch ein erfindungsgemäßes Rohr;
- Fig. 3: zeigt einen seitlichen Schnitt durch ein erfindungsgemäßes Rohr;
- Fig. 4: zeigt einen seitlichen Schnitt durch ein erfindungsgemäßes Rohr.

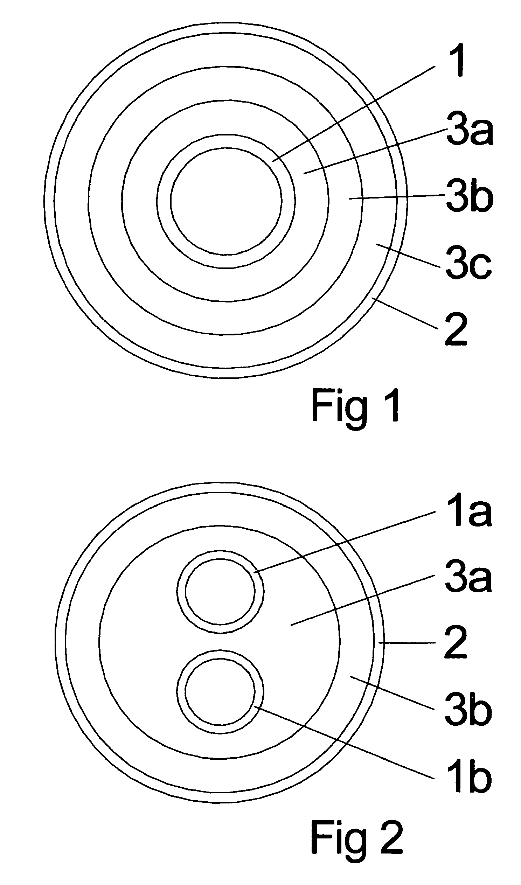

Fig. 1 zeigt einen Querschnitt durch das erfindungsgemäße Rohr.

Die Trägerschicht 1 ist an ihrer Außenoberfläche vollumfänglich von der Wärmedämmschicht 3 umgeben, die beispielsweise mehrlagig 3a, 3b, 3c ausgeführt ist.

Die Schutzschicht 2 ist vollumfänglich an der Außenoberfläche der Wärmedämmschicht 3 angeordnet.

Fig. 2 zeigt einen Querschnitt durch das erfindungsgemäße Rohr in einer anderen Ausführung.

Hier sind zwei Trägerschichten 1 a, 1 b gezeigt, die zwei Rohre darstellen, in denen Fluide durchgeleitet werden können. Die beiden Trägerschichten 1 a, 1 b können aus dem gleichen Polymer oder aus verschiedenen Polymeren hergestellt sein.

Es schließt sich eine Wärmedämmschicht 3a, 3b an, die in diesem Beispiel aus zwei Lagen aufgebaut ist.

Die Trägerschicht 1 besteht aus einem vernetzten Polyethylen, die Schutzschicht 2 aus einem geschäumten Polyethylen mit einer Dichte von 500 kg/m³, die Wärmedämmschicht 3a aus einem geschäumten Polyurethan mit einer Dichte von 55 kg/m³ und die Wärmedämmschicht 3b aus geschäumtem, vernetztem Polyethylen mit einer Dichte von 60 kg/m³. Die Schutzschicht 2 umgibt die Wärmedämmschicht 3 vollständig an deren äußeren Umfang.

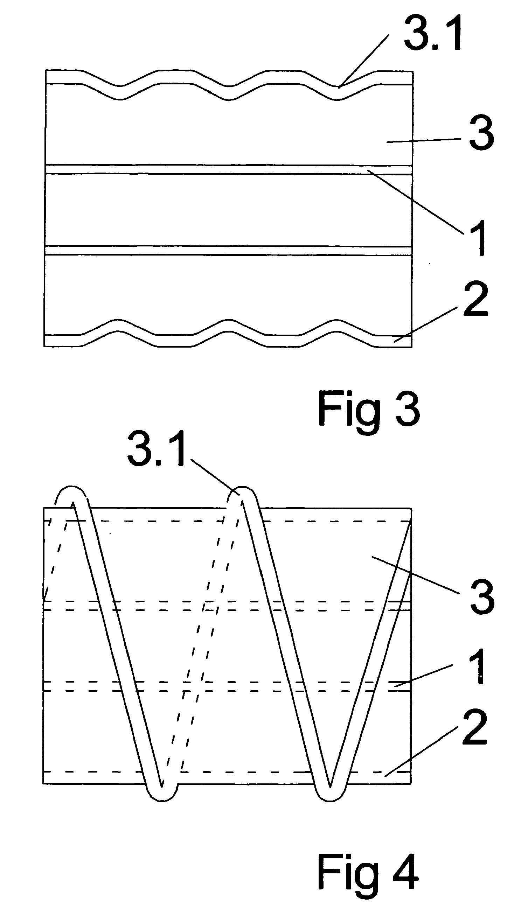

Fig. 3 zeigt einen seitlichen Schnitt durch ein Rohr gemäß dieser Erfindung.

Die Trägerschicht 1 aus Polybuten ist an der Außenoberfläche von der Wärmedämmschicht 3 aus Polypropylen-Schaum mit einer Dichte von 58 kg/m³ umgeben,

Die Schutzschicht 2 aus geschäumtem Polyethylen ist an der Außenoberfläche der Wärmedämmschicht 3 angeordnet und weist bei einer Dichte von 470 kg/m³ Querschnittseinschnürungen 3.1 auf.

Schließlich zeigt Fig. 4 einen seitlichen Schnitt durch ein erfindungsgemäßes Rohr. Der Schichtaufbau ist genau wie unter Fig. 3 beschrieben, wird jedoch durch eine schraubenartige Erhebung 3.1 auf der Schutzschicht 2 ergänzt.

### Beispiele

In einer Coextrusionslinie wird mit Peroxyd vernetztes Polyethylen (PE-Xa) rohrförmig zu einer Trägerschicht extrudiert und eine Wärmedämmschicht aus Polyethylenschaum aufextrudiert.

Die Wärmedämmschicht sitzt infolge des Schrumpfverhaltens fest auf der Trägerschicht.

Zwischen Trägerschicht und Isolierschicht wird eine Trennschicht in Form eines Wachses eingebracht.

Anschließend wird eine Schutzschicht im Coextrusionsverfahren aufextrudiert.

Es hat sich in überraschender Weise gezeigt, dass die Haftung der verschiedenen Schichten des Rohres für die konventionelle Verlegung ausreichend ist. Beim Wickeln des Rohres kommt es nicht zu Ablösungen oder Faltenbildung. Zur Verbindung der Rohre kann der Schaum der Wärmedämmschicht und/oder der Schutzschicht eingeschnitten und leicht entfernt werden.

Für die grabenlose Verlegung des Rohres kann der Schaum mit einem Haftvermittler sicher fixiert werden, wobei der Schaum im Verbindungsbereich dann allerdings nicht leicht zu entfernen ist.

Der Schaum der Wärmedämmschicht und/oder der Schutzschicht zeigt eine überraschend hohe mechanische Belastbarkeit und schützt die Trägerschicht sogar bei der Verlegung ohne Sandbett sicher. Der Schaum der Wärmedämmschicht und/oder der Schutzschicht wirkt dabei schützend für das Rohr gemäß der vorliegenden Erfindung.

Der Schaum der Wärmedämmschicht und/oder der Schutzschicht ist bspw. geschlossenzellig und schützt daher die Trägerschicht auch vor Feuchtigkeit, z.B. im Erdreich.

Durch die geringe Dichte (ca. 400 bis 500 kg/m³) und die geringe Wärmeleitfähigkeit (ca. 0,08 bis 0,10 W/mK) wird durch den Schaum der Wärmedämmschicht und/oder der Schutzschicht eine Wärmedämmung erreicht, welche z.B. die Kondensatbildung auf frei verlegten Kaltwasserleitungen verhindert.

Auch die Abkühlung der mit dem Rohr zu transportierenden Medien kann wirkungsvoll verhindert werden. Es ist eine kurzzeitige Belastung mit maximal 110 °C möglich.

Ein weiterer Nutzen des Rohres ist, dass eine Inkjetsignierung auf dem Schaum wesentlich beständiger ist als auf der als PE-Xa-Rohr ausgebildeten Trägerschicht oder auf einer Sauerstoffsperrschicht. Hierdurch resultieren Vorteile bei der Kennzeichnung des erfindungsgemäßen Rohrs.

Durch den zusätzlichen Energieeintrag beim Aufbringen der Wärmedämmschicht und/oder der Schutzschicht wird die Abkühlung des Rohres bei der Herstellung in der Extrusionslinie deutlich verzögert. Das Rohr lässt sich leichter handhaben bzw. wickeln. Durch die Restwärme bei der Herstellung entweicht bereits ein großer Teil der Zerfallsprodukte des Peroxyds aus dem vernetzten Polymer der Trägerschicht. Die für derartiges Material erforderliche Temperzeit kann dadurch reduziert werden.

Ferner kann in der Extrusionslinie das Innere des Rohres bereits von Spülluft durchströmt werden, z.B. durch eine Absaugung am Hauptextruder. Dadurch werden die aus dem Material der Trägerschicht austretenden Geruchsstoffe gleich ausgespült. Die Temperzeit kann dadurch noch weiter reduziert werden.

## Patentansprüche

1. Rohr, enthaltend wenigstens eine Trägerschicht (1), wenigstens eine Wärmedämmschicht (3) und wenigstens eine Schutzschicht (2), wobei die Schutzschicht (2) auf der Wärmedämmschicht (3), und diese auf der Trägerschicht (1) angeordnet ist, wobei wenigstens die Trägerschicht (1) und die Schutzschicht (2) ein thermoplastisches Polymer enthalten, **dadurch gekennzeichnet, dass** die Dichte der Wärmedämmschicht (3) 30 bis 110 kg/m³ und die Dichte der Schutzschicht (2) 300 bis 750 kg/m³ beträgt.

2. Rohr nach Anspruch 1, **dadurch gekennzeichnet, dass** die Wärmedämmschicht (3) wenigstens ein geschäumtes Polymer enthält und einteilig oder mehrteilig ausgebildet ist.

3. Rohr nach einem der vorangehenden Ansprüche, **dadurch gekennzeichnet, dass** die mehrteilige Wärmedämmschicht (3) wenigstens teilweise unterschiedliche Materialien enthält.

4. Rohr nach einem der vorangehenden Ansprüche, **dadurch gekennzeichnet, dass** die Wärmeleitfähigkeit der Wärmedämmschicht (3) höchstens 50 % der Wärmeleitfähigkeit der Trägerschicht (1) beträgt.

5. Rohr nach einem der vorangehenden Ansprüche, **dadurch gekennzeichnet, dass** die Wärmeleitfähigkeit der Wärmedämmschicht (3) höchstens 10 % der Wärmeleitfähigkeit der Trägerschicht (1) beträgt.

6. Rohr nach einem der vorangehenden Ansprüche, **dadurch gekennzeichnet, dass** die Trägerschicht (1) wenigstens teilweise Polyolefin enthält.

7. Rohr nach Anspruch 6, **dadurch gekennzeichnet, dass** das Polyolefin ein vernetztes oder ein vernetzbares Polyethylen ist.

8. Rohr nach einem der vorangehenden Ansprüche, **dadurch gekennzeichnet, dass** die Wärmedämmschicht (3) ein vernetztes und / oder ein unvernetztes Polyolefin und /oder ein Polyurethan enthält.

9. Rohr nach einem der vorangehenden Ansprüche, **dadurch gekennzeichnet, dass** die Wärmedämmschicht (3) einen Zusatzstoff enthält, der die Wärmeleitung verringert.

10. Rohr nach Anspruch 9, **dadurch gekennzeichnet, dass** der Zusatzstoff ausgewählt ist aus der Gruppe, bestehend aus Hohlglaskugeln, geschäumtem Glas, geschäumter Keramik und lamellaren oder Wärmestrahlung reflektierende Materialien.

11. Rohr nach einem der vorangehenden Ansprüche, **dadurch gekennzeichnet, dass** auf oder zwischen wenigstens der Trägerschicht (1) und / oder der Wärmedämmschicht (3) und / oder der Schutzschicht (2) mindestens eine weitere Lage vorhanden ist.

12. Rohr nach Anspruch 11, **dadurch gekennzeichnet, dass** die Lage Wachs oder Fluorpolymer oder eine Metallfolie oder eine Metall-Kunststoff-Verbundfolie oder Ethylvinylalkohol (EVOH) oder eine im Vakuumverfahren aufgebrachte Diffusionssperrschicht enthält.

13. Rohr nach einem der vorangehenden Ansprüche, **dadurch gekennzeichnet, dass** die Schutzschicht (2) eine Strukturierung mindestens an der Außenseite aufweist, wobei die Strukturierung als Querschnittseinschnürung, als schraubenartig angeordnete Nut oder Erhebung ausgeführt ist.

14. Rohr nach einem der Ansprüche 1 bis 13 zur Durchleitung eines Fluids.

15. Rohrsystem mit mindestens einem Rohr nach einem der Ansprüche 1 bis 14.

## Claims

1. Tube, comprising at least one carrier layer (1), at least one thermal barrier layer (3) and at least one protective layer (2), the protective layer (2) being arranged on the thermal barrier layer (3) and the latter in turn being arranged on the carrier layer (1), at least the carrier layer (1) and the protective layer (2) comprising a thermoplastic polymer, **characterized in that** the density of the thermal barrier layer (3) is 30 to 110 kg/m³ and the density of the protective layer (2) is 300 to 750 kg/m³.

2. Tube according to Claim 1, **characterized in that** the thermal barrier layer (3) comprises at least one foamed polymer and has a single-part or multipart form.

3. Tube according to either of the preceding claims, **characterized in that** the multipart thermal barrier layer (3) comprises different materials at least in parts.

4. Tube according to one of the preceding claims, **characterized in that** the thermal conductivity of the thermal barrier layer (3) is at most 50% of the thermal conductivity of the carrier layer (1).

5. Tube according to one of the preceding claims, **characterized in that** the thermal conductivity of the thermal barrier layer (3) is at most 10% of the thermal conductivity of the carrier layer (1).

6. Tube according to one of the preceding claims, **characterized in that** the carrier layer (1) comprises polyolefin at least in parts.

7. Tube according to Claim 6, **characterized in that** the polyolefin is a crosslinked or a crosslinkable polyethylene.

8. Tube according to one of the preceding claims, **characterized in that** the thermal barrier layer (3) comprises a crosslinked and/or a non-crosslinked polyolefin and/or a polyurethane.

9. Tube according to one of the preceding claims, **characterized in that** the thermal barrier layer (3) comprises an additive which reduces the thermal conduction.

10. Tube according to Claim 9, **characterized in that** the additive is selected from the group consisting of hollow glass spheres, foamed glass, foamed ceramic and lamellar materials or materials which reflect thermal radiation.

11. Tube according to one of the preceding claims, **characterized in that** at least one further ply is present on or between at least the carrier layer (1) and/or the thermal barrier layer (3) and/or the protective layer (2).

12. Tube according to Claim 11, **characterized in that** the ply comprises wax or a fluoropolymer or a metal foil or a metal/plastic composite foil or ethyl vinyl alcohol (EVOH) or a diffusion barrier layer applied in a vacuum process.

13. Tube according to one of the preceding claims, **characterized in that** the protective layer (2) has a structuring at least on the outer side, the structuring being in the form of a cross-sectional constriction, of a helically arranged groove or of an elevation.

14. Tube according to one of Claims 1 to 13 for conducting a fluid.

15. Tube system comprising at least one tube according to one of Claims 1 to 14.

## Revendications

1. Tube, comprenant au moins une couche de support (1), au moins une couche d'isolation thermique (3) et au moins une couche de protection (2), dans lequel la couche de protection (2) est disposée sur la couche d'isolation thermique (3) et celle-ci est disposée sur la couche de support (1), dans lequel au moins la couche de support (1) et la couche de protection (2) contiennent un polymère thermoplastique, **caractérisé en ce que** la densité de la couche d'isolation thermique (3) vaut 30 à 110 kg/m³ et la densité de la couche de protection (2) vaut 300 à 750 kg/m³.

2. Tube selon la revendication 1, **caractérisé en ce que** la couche d'isolation thermique (3) contient au moins un polymère expansé et est réalisée en une seule partie ou en plusieurs parties.

3. Tube selon l'une quelconque des revendications précédentes, **caractérisé en ce que** la couche d'isolation thermique (3) en plusieurs parties contient au moins partiellement des matériaux différents.

4. Tube selon l'une quelconque des revendications précédentes, **caractérisé en ce que** la conductibilité thermique de la couche d'isolation thermique (3) vaut au maximum 50 % de la conductibilité thermique de la couche de support (1).

5. Tube selon l'une quelconque des revendications précédentes, **caractérisé en ce que** la conductibilité thermique de la couche d'isolation thermique (3) vaut au maximum 10 % de la conductibilité thermique de la couche de support (1).

6. Tube selon l'une quelconque des revendications précédentes, **caractérisé en ce que** la couche de support (1) contient au moins partiellement une polyoléfine.

7. Tube selon la revendication 6, **caractérisé en ce que** la polyoléfine est un polyéthylène réticulé ou réticulable.

8. Tube selon l'une quelconque des revendications précédentes, **caractérisé en ce que** la couche d'isolation thermique (3) contient une polyoléfine réticulée et/ou une polyoléfine non réticulée et/ou un polyuréthane.

9. Tube selon l'une quelconque des revendications précédentes, **caractérisé en ce que** la couche d'isolation thermique (3) contient une matière d'addition, qui diminue la conduction thermique.

10. Tube selon la revendication 9, **caractérisé en ce que** la matière d'addition est sélectionnée dans le groupe composé de billes de verre creuses, de mousse de verre, de mousse de céramique et de matériaux lamellaires et réfléchissant le rayonnement thermique.

11. Tube selon l'une quelconque des revendications précédentes, **caractérisé en ce qu'**il se trouve au moins une autre couche sur ou entre au moins la couche de support (1) et/ou la couche d'isolation thermique (3) et/ou la couche de protection (2).

12. Tube selon la revendication 11, **caractérisé en ce que** la couche contient de la cire ou un fluoropolymère ou un film métallique ou un film composite métal-plastique ou de l'éthylène-alcool vinylique (EVOH) ou une couche de barrière de diffusion déposée par un procédé sous vide.

13. Tube selon l'une quelconque des revendications précédentes, **caractérisé en ce que** la couche de protection (2) présente une structuration au moins sur la face extérieure, dans lequel la structuration est réalisée sous la forme d'un étranglement de la section transversale, d'une rainure ou d'une surélévation disposée sous forme hélicoïdale.

14. Tube selon l'une quelconque des revendications 1 à 13 pour le transport d'un fluide.

15. Système de tubes avec au moins un tube selon l'une quelconque des revendications 1 à 14.
